# EUROPEAN PATENT APPLICATION

(11) **EP 4 807 552 A1**
(43) Date of publication of application: **16.09.2026**
(21) Application number: 25163962.1
(22) Date of filing: 14.03.2025
(51) Int. Cl.: G06F 9/50, G06F 9/48

(54) **PROACTIVE CONTROL OF TASK EXECUTION IN A HYPERSCALER**

(71) Applicant: SAP SE, 69190 Walldorf (DE)
(72) Inventor: ROHDE, Lena, D-69190 Walldorf (DE); KOENIG, Steffen, D-69190 Walldorf (DE); KREBS, Rouven, D-69190 Walldorf (DE)
(74) Representative: DeltaPatents B.V.

(57) **Abstract**

Some embodiments are directed to controlling task execution in a hyperscaler. An estimated future success metric for a task may be compared to a minimum acceptable success threshold and in response to determining that the likelihood of successful completion is below the minimum acceptable success threshold, the task is be queued for deferred execution, or otherwise passed to a scheduling mechanism of the hyperscaler for execution.

## Description

### TECHNICAL FIELD

The presently disclosed subject matter relates to a method for proactive control of task execution in a hyperscaler, a system for proactive control of task execution in a hyperscaler, and a computer-readable medium.

### BACKGROUND

In the field of cloud computing and enterprise resource planning (ERP), the reliability and performance of infrastructure platforms are paramount due to the critical nature of the applications they support, such as those provided by SAP. Hyperscalers, which offer large-scale cloud services across multiple regions and zones, form the backbone of modern cloud architecture. For businesses utilizing such systems, any disruption in the underlying hyperscaler infrastructure can have significant repercussions, affecting data processing, business operations, and overall enterprise productivity.

There is a strong motivation in the field to develop solutions that can anticipate and mitigate such disruptions, ensuring high availability, minimal downtime, and seamless continuity of services. Effective management and operational workflows within hyperscaler environments are crucial, driving the need for intelligent, responsive systems that can handle dynamic cloud infrastructures efficiently.

### SUMMARY

It would be advantageous to have improved control of execution of tasks in a hyperscaler.

The inventors found that inefficiency and potential operational disruptions are caused by the lack of real-time identification and response to issues within hyperscaler environments. Currently, when a hyperscaler faces specific issues, for instance, in a designated Availability Zone, there is no effective mechanism to halt or queue incoming operations to prevent failures or system instability.

Execution is initiated on tasks that are designated for execution, regardless of whether execution of the task is likely to succeed or not. Unfortunately, failed execution is not without costs. If a task fails in a hyperscaler, a recovery action is performed so that execution of the task can be retried in a correct state. This means that at least the effort exerted before the failure occurs will have been for nothing, but likely additional computation will be exerted as part of the recovery process, e.g., reverting the partial work done before the failure. The recovery cost is in addition to resources that are wasted due to the unsuccessful execution. Together we refer to these as the task failure cost. This means that a failed execution followed by a successful execution of a task will exert significantly more computational resources than a successful execution without the failure would have done. To be precise, the difference between a failed execution followed by a successful execution of a task and an immediately successful execution is the task failure cost.

Apart from causing an increase in useless work performed in the hyperscaler, the parallel execution of many failing tasks makes debugging the problem more difficult and makes bringing the system back to full operational capability unnecessarily harder.

Unsuccessful execution of tasks leads to prolonged downtimes, increased operational costs, and unsatisfactory service reliability for systems running on such infrastructures. By introducing a queue-based identification system that recognizes problem areas and manages pending operations accordingly, the invention addresses these inefficiencies and enhances the resilience and reliability of cloud operations.

In an embodiment, an estimated future success metric for a task is compared to a minimum acceptable success threshold. In response to determining that the likelihood of successful completion is below the minimum acceptable success threshold, the task is queued for deferred execution or otherwise passed to a scheduling mechanism of the hyperscaler for execution.

For example, the embodiment may be configured for collecting data on the operational readiness of operational resources required by the designated tasks and estimating the future success metric for the task based on the operational readiness of the required operational resources.

In an embodiment, the minimum acceptable success threshold for the task is based on a task failure cost associated with the task. If the task failure cost is high, a higher minimum acceptable success threshold may be used, than if the task failure cost is low.

A device configured for proactive control of task execution in a hyperscaler according to an embodiment is an electronic device, e.g., a computer.

An aspect is a method for proactive control of task execution in a hyperscaler. An embodiment of the method may be implemented on a computer as a computer implemented method, in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer-readable medium for performing an embodiment of the method when said program product is executed on a computer. For example, a computer readable medium may be a computer readable storage medium.

In an embodiment, the computer program comprises computer program code adapted to perform all or part of the steps of an embodiment of the method when the computer program is run on a computer. Preferably, the computer program is embodied on a computer-readable medium.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a task execution system,
Figure 1b schematically shows an example of an embodiment of a task execution system,
Figure 2 schematically shows an example of an embodiment of a task execution system,
Figure 3 schematically shows an example of an embodiment of a task execution system,
Figure 4 schematically shows an example of an embodiment of a method for proactive control of task execution in a hyperscaler,
Figure 5a schematically shows a computer-readable medium having a writable part comprising a computer program according to an embodiment,
Figure 5b schematically shows a representation of a processor system according to an embodiment.

### Reference signs list

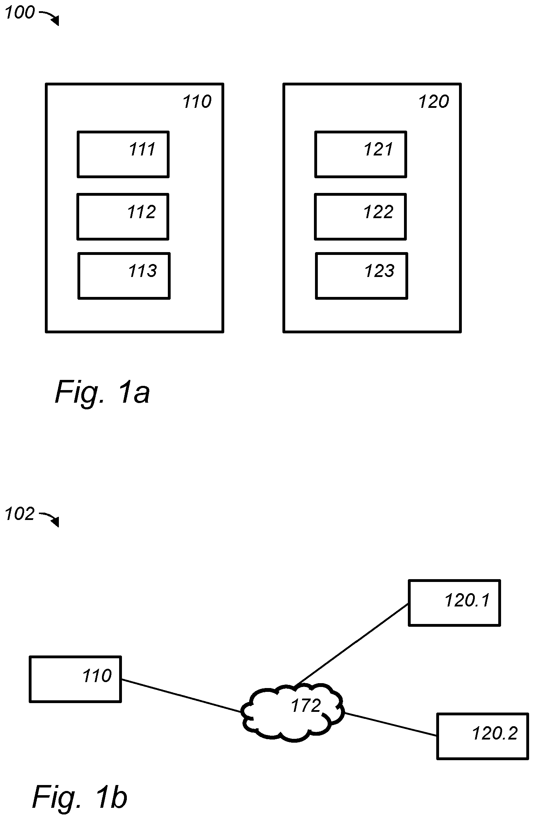

The following list of references and abbreviations corresponds to figures 1-3, 5a, 5b, and is provided for facilitating the interpretation of the drawings and shall not be construed as limiting the claims.
- 100, 102: task execution system
- 110: task execution controller
- 120, 120.1, 120.2: task execution computer
- 111, 121: a processor system
- 112, 122: storage
- 113, 123: communication interface
- 172: a computer network

- 200: task execution system
- 210: scheduled task manager
- 219: a set of tasks
- 211-213: a task
- 220: task analyzer
- 221.1-223.2: a subtask
- 231-233: a set of operational resources
- 231.1-233.2: an operational resource
- 240: resource readiness monitor
- 241.1-243.2: operational readiness data
- 250: future success metric estimator
- 259: future success metrics
- 251-253: future success metric
- 260: task selector
- 261: deferred execution queue
- 262: hyperscaler scheduling mechanism
- 301: User
- 310: Administration/Operation Console
- 320: Dependency Analyzer
- 330: Execution Probability Calculator
- 331: Status Retrieval Submodule
- 332: Probability Calculation Algorithm
- 333: Notification System
- 340: Operation Management and Recommendation System
- 341: Recommendation Engine
- 342: Queue Manager
- 360: Continuous Evaluation and Adjustment Module
- 361: Evaluation Scheduler
- 362: Dynamic Adjustment Processor
- 351: Hyperscaler APIs
- 352: Landscape Management
- 353: Logs
- 354: Landscape Automation
- 371-373: Enterprise Application Systems

- 1000, 1001: a computer-readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible to embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only but also includes every other combination of features described herein or recited in mutually different dependent claims.

In the field of cloud computing and enterprise resource planning (ERP), the reliability and performance of infrastructure platforms are paramount due to the critical nature of the applications they support. Hyperscalers, typically offering large-scale cloud services across multiple regions and zones, form the backbone of modern cloud architecture. For hyperscalers, any disruption in the underlying hyperscaler infrastructure can have significant repercussions, affecting data processing, business operations, and overall enterprise productivity. There is a strong motivation in the field to develop solutions that can anticipate and mitigate such disruptions, ensuring high availability, minimal downtime, and seamless continuity of services. Effective management and operational workflows within hyperscaler environments are crucial, driving the need for intelligent, responsive systems that can handle dynamic cloud infrastructures efficiently.

Embodiments ease potential operational disruptions, such as those caused by the lack of real-time identification and response to issues within hyperscaler environments. Currently, when a hyperscaler faces specific issues, for instance, in a designated Availability Zone, there is no effective mechanism to halt or queue incoming operations to prevent failures or system instability. This leads to prolonged downtimes, increased operational costs, and unsatisfactory service reliability for systems running on such infrastructures. By introducing a queue-based identification system that recognizes problem areas and manages pending operations accordingly, the invention addresses these inefficiencies and enhances the resilience and reliability of cloud operations.

For instance, consider a scenario where a user of the hyperscaler is running several systems in a particular availability zone, e.g., EU-WEST. Suppose five system operations fail due to a transient issue in this specific availability zone. Without an efficient management mechanism, incoming operations would continue to attempt processing, likely leading to further failures and exacerbation of the problem. However, by employing an embodiment, this is addressed by implementing a queue-based system that, upon recognizing the failures, will automatically queue subsequent system operations targeting the impacted zone. This approach not only prevents additional operational failures but also allows for prioritized troubleshooting and resolution of the underlying hyperscaler issue.

Embodiments enhance the operational stability and reliability of systems running in hyperscaler environments. By implementing a queue-based management solution, enterprises can ensure that their systems remain resilient and responsive even in the face of regional infrastructure issues. This not only improves service reliability but may also optimize resource utilization, reduce downtime, and enhance overall user satisfaction with cloud services.

Embodiments can be seamlessly integrated into existing cloud operations, providing a proactive solution to hyperscaler-related challenges and reinforcing the robustness of ERP systems in cloud environments.

Embodiments are applicable to various enterprise IT management and cloud service systems that involve scheduled task execution. One embodiment of the invention optimizes task execution by avoiding tasks that are likely to fail, thereby improving efficiency and reducing unnecessary computational and operational overhead. This approach is particularly relevant for systems that manage complex IT landscapes, cloud environments, and enterprise services.

Systems that facilitate landscape management can benefit from enhanced automation workflows, ensuring that failed tasks do not disrupt system operations while optimizing resource utilization. Enterprise cloud service platforms, both private and public, can integrate this approach to improve service reliability and reduce operational costs. In cloud migration and transformation services, the ability to preemptively identify and defer tasks likely to fail contributes to seamless transitions and minimizes downtime. Similarly, managed cloud service offerings that oversee enterprise applications and infrastructure can implement this invention.

**Figure 1a** schematically shows an example of an embodiment of a task execution controller 110 and of an embodiment of a task execution computer 120. Shown is a task execution controller 110, and a task execution computer 120, which may both be part of a task execution system 100.

Task execution controller 110 is configured for proactive control of task execution in a hyperscaler. Task execution computer 120 is configured to execute the tasks within the hyperscaler. For example, task execution computer 120 may be the hyperscaler itself. Task execution controller 110 may be an independent system, but may also be integrated into the hyperscaler, e.g., in task execution computer 120.

Task execution controller 110 computes a future success metric for tasks that are designated for execution. Tasks can be designated for execution ad-hoc or they may have been scheduled for execution beforehand. Based on the future success metric, controller 110 selects either to pass the task to the hyperscaler for regular execution, e.g., by forwarding the task to a task scheduler, e.g., a traditional task scheduler, or alternatively to put the task in a queue for deferred execution. When conditions improve, e.g., when the future success metric improves, the task may be removed from the queue and passed on for regular execution, e.g., task scheduling.

For example, task execution system 100 may be used in or for a hyperscaler to avoid the execution of tasks that are going to fail. Failing tasks significantly add overhead to the system, as they incur computing costs without producing a result, and moreover cost additional computing resources in the form of recovery actions. Both the incurred computing costs and additional computing resources contribute to the task failure cost.

Task execution controller 110 may comprise a processor system 111, a storage 112, and a communication interface 113. Task execution computer 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Task execution controller 110 and task execution computer 120 are represented here as single devices, though task execution controller 110 and/or task execution computer 120 could just as well be implemented as a system, e.g., a geographically distributed system, e.g., a cloud computing system, e.g., a system comprising multiple computers. Further, any one of task execution controller 110 and task execution computer 120 could be implemented as a process running on a computer, e.g., a cloud computing system.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, e.g., a RAM, and/or a non-volatile writable part, e.g., Flash. Storage may comprise a non-volatile non-writable part, e.g., ROM, e.g., storing part of the software.

Devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. Devices 110 and 120 may comprise a connection interface that is arranged to communicate within task execution system 100 or outside of task execution system 100 as needed. For example, the connection interface may comprise a connector, e.g., a wired connector, e.g., an Ethernet connector, an optical connector, etc., or a wireless connector, e.g., an antenna, e.g., a Wi-Fi, 4G, or 5G antenna.

Communication interface 113 may be used to send or receive digital data, e.g., receiving a set of tasks designated for execution within the hyperscaler, receiving data on an operational readiness of the operational resources required by the designated tasks, queuing a task, passing a task to a scheduling mechanism of a hyperscaler.

Communication interface 123 may be used to send or receive digital data, e.g., sending a set of tasks designated for execution within the hyperscaler, sending data on an operational readiness of the operational resources required by the designated tasks, receiving a task passed to a scheduling mechanism of the hyperscaler.

Task execution controller 110 and task execution computer 120 may have a user interface, which may include well-known elements such as one or more buttons, a keyboard, a display, a touch screen, etc. The user interface may be arranged for accommodating user interaction for initiating the proactive management of tasks according to an embodiment of the method.

The execution of devices 110 and 120 may be implemented in a processor system. Devices 110 and 120 may comprise functional units to implement aspects of embodiments. The functional units may be part of the processor system. For example, functional units shown herein may be wholly or partially implemented in computer instructions stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, task execution controller 110 and task execution computer 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, devices 110 and 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, task execution controller 110 and task execution computer 120 may comprise circuits, e.g., for cryptographic processing, and/or arithmetic processing.

In hybrid embodiments, functional units are implemented partially in hardware, e.g., as coprocessors, and partially in software stored and executed on the device.

**Figure 1b** schematically shows an example of an embodiment of a task execution system 102. Task execution system 102 may comprise multiple task execution computers, shown are task execution computers 120.1 and 120.2. Task execution system 102 also comprises at least one task execution controller; shown is task execution controller 110. The devices are connected through a computer network 172, e.g., the Internet. Task execution controller 110 and task execution computers 120.1 and 120.2 may be according to an embodiment.

For example, task execution controller 110 may control execution of tasks at the multiple task execution computers, in the shown case, task execution computers 120.1 and 120.2.

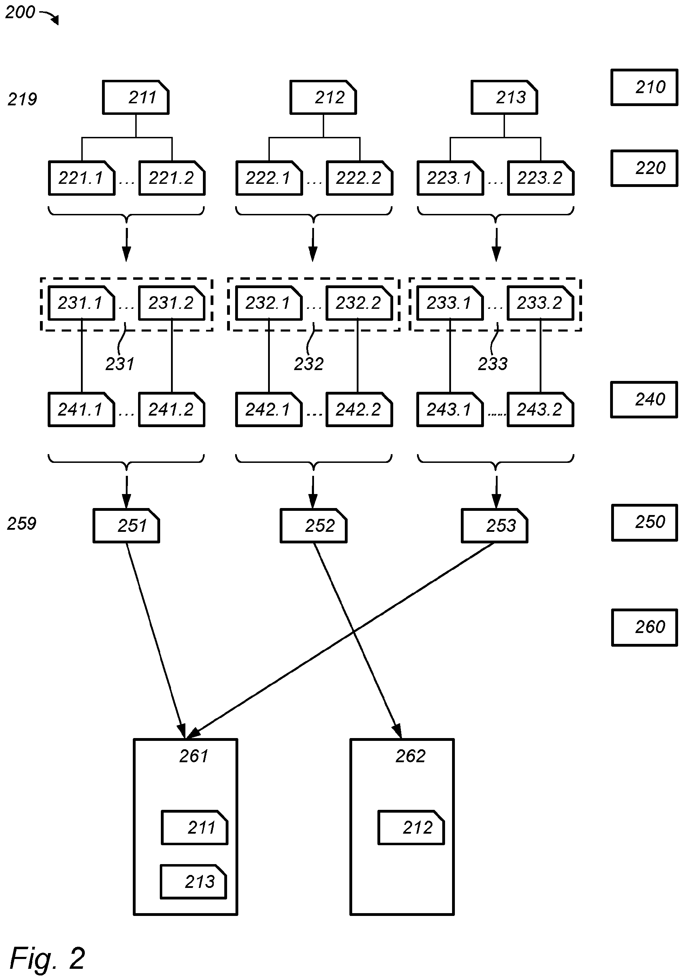

**Figure 2** schematically shows an example of an embodiment of a task execution system 200.

### Tasks designated for execution within a hyperscaler

Task execution system 200 is configured for proactive control of task execution in a hyperscaler. Task execution system 200 is configured to obtain a set of tasks 219 designated for execution within the hyperscaler. For example, system 200 may comprise a scheduled task manager 210 configured thereto. Figure 2 shows a set of tasks 219, in particular tasks 211-213. There may be more than 3 tasks designated for execution.

A hyperscaler is a computing infrastructure that dynamically allocates resources to support workloads across distributed data centers. Hyperscalers typically operate in cloud environments, where they manage computational tasks by leveraging load balancing and/or virtualization technologies. In such environments, tasks are often scheduled for execution based on factors such as system policies, resource availability, and dependencies. However, at any given moment, there can be tasks that have been designated for execution but are not yet running. This is typically because the task has been scheduled for a moment in the future, but can also occur due to other factors, e.g., dependencies on other tasks that have not yet completed. These pending tasks are maintained in the hyperscaler in a data structure, such as a scheduling queue.

In a hyperscale computing environment, tasks designated for execution but not yet running can be identified by querying the scheduling or orchestration system. This can be achieved, e.g., by requesting a batch job list and filtering based on state to determine jobs that are pending execution. Similarly, in containerized environments, a list of scheduled containers or pods can be retrieved, with filtering applied to identify those in a pending or non-running state. In virtualized or autoscaling compute environments, querying the resource management system provides a list of instances that have been allocated but are not yet executing. Additionally, log and monitoring services may be queried to obtain tasks that are awaiting execution due to factors such as dependency resolution or system policies.

Embodiments may be applied to a particular availability zone of the hyperscaler. An availability zone is a zone where a certain set of infrastructure is running that is independent from other availability zones. The infrastructure in an availability zone is geographically located together.

Availability zones (AZs) are single failure domains within a single geographical region and are separate physical locations with independent power, network, and cooling.

### Operational Readiness

Task execution system 200 is configured to collect data on an operational readiness of operational resources required by designated tasks 219. For example, system 200 may comprise a resource readiness monitor 240 configured thereto.

An operational resource is a resource needed by the task in order to complete execution. For example, an operational resource may be one or more of the following: a network resource, a storage resource, an API endpoint, a network segment, an environment, an availability zone, a database, a virtual machine, a memory, a CPU, a reuse or backing service, an authentication service, an integrated business process, a CRM, an ERP, an application-level dependency.

The operational resources required by a designated task may be determined through an analysis of the task's execution parameters, system dependencies, and resource allocation policies. Task definitions in a hyperscaler typically specify resource requirements explicitly, such as compute resources (e.g., CPU, memory, and virtual machines), storage resources (e.g., databases, persistent volumes), and network resources (e.g., network segments, API endpoints, authentication services). In an embodiment, the hyperscaler maintains dependency graphs that identify application-level dependencies, including business processes, CRM or ERP systems, and integrated services. In some implementations, these requirements may be evaluated dynamically, e.g., by a resource scheduler or orchestrator, referencing system metadata, configuration files, or service-level agreements to determine which operational resources must be available for execution.

Furthermore, resource dependencies may be derived based on observed historical resource usage consumed in past task executions of the same or similar task. The observed historical resource usage may have been obtained and stored using a monitoring tool.

There are various ways to collect data on an operational readiness of an operational resource. Figure 2 shows operational readiness data 241.1 and 241.2 for task 211. Figure 2 further shows operational readiness data 242.1 and 242.2 for task 212, and operational readiness data 243.1 and 243.2 for task 213. The number of sources of operational readiness data may vary among tasks, depending on the number of operational resources a task requires, but also on the number of sources there may be for a particular operational resource.

Data relevant to assessing operational readiness, is also referred to as operational readiness signals. There may be multiple different signals indicative of operational readiness, which may be integrated by a model. Alternatively, only one operational readiness signal is used, e.g., failure rate. In particular, failure rate over all tasks using a particular operational resource, say in a past time frame, e.g., the past hour, past half hour, etc.

Retrieving real-time status metrics from a monitoring system enables a task execution system to dynamically assess the operational readiness of required resources. Real-time metrics may include CPU and memory utilization, network bandwidth availability, storage latency, API endpoint response times, or authentication service availability. By collecting and analyzing these metrics, the system can estimate operational readiness. Operational readiness may be expressed as a likelihood, e.g., a probability, that a required resource will be available when the task is executed.

Accessing status data, logging data, associated service tickets, and hyperscaler API information related to required resources provides another view of operational readiness, which is used in some embodiments. Status data can indicate whether resources are online, degraded, or unavailable, while logging data may reveal recent failures or instability. Associated service tickets provide information on, e.g., ongoing maintenance, outages, or performance degradations affecting required resources. Additionally, hyperscaler APIs can offer programmatic access to real-time infrastructure conditions, allowing the system to combine multiple data sources to derive a more accurate representation of a resource's availability.

In an embodiment, operational readiness includes that the required operational resource has a sufficiently low response time. A resource with high latency may be technically available but unsuitable for executing time-sensitive tasks. For example, an API endpoint or database query returning responses that are too slow may cause the task to execute too slowly, which, for some tasks, means failure. Accordingly, in an embodiment, distribution data on response times of a required operational resource is collected.

Obtaining distribution data on response times enables a more predictive approach to determining operational readiness. Instead of relying solely on point-in-time measurements, the system can analyze historical response time distributions to assess the likelihood of successful task completion. This probabilistic model may consider variations in response times under different load conditions, allowing the system to forecast potential bottlenecks before they impact execution. Using distribution data, e.g., according to a statistical model, the system can dynamically predict a likelihood of failure.

Obtaining the operational resources required by the tasks designated for execution can be done in various ways. For example, required operational resources may be stored in a file and read when needed. Further ways to derive required operational resources are already listed above. Yet a further way to obtain the required operational resources is illustrated in Figure 2.

Task execution system 200 may be configured, for at least a portion of the set of tasks, to analyze the tasks to identify a set of subtasks on which successful execution of the respective task depends, and for a given task, to determine, for the identified subtasks, a set of operational resources required for execution. For example, system 200 may comprise a task analyzer 220 configured thereto.

Figure 2 shows for each of tasks 211-213 a set of subtasks on which successful execution of the respective task depends. The set may comprise only one subtask, but may comprise more than one subtask. Shown in Figure 2, task 211 is analyzed to contain subtasks 221.1 and 221.2; likewise task 212 comprises subtasks 222.1 and 222.2, and task 213 comprises subtasks 223.1 and 223.2. There may be more than 2 subtasks. There may be only a single subtask, though in an embodiment at least one task comprises multiple subtasks.

A particular task for which this approach works well is flows. In this case the steps in the flow may be regarded as subtasks. In a hyperscaler environment, a flow refers to a sequence of steps, e.g., automated tasks, processes, or operations, e.g., executed within a cloud management or orchestration system. These flows may include provisioning, scaling, configuration management, monitoring, and remediation steps, often triggered by predefined conditions, e.g., user inputs, or system events. By automating workflows, flows enhance efficiency, reduce manual intervention, and ensure consistency across distributed cloud environments.

For a subtask identified in a task, e.g., in a flow, the methods described herein may be used to determine its operational requirements.

In an embodiment, analyzing the tasks further comprises determining a type of operation on the operational resource. Determining operational readiness may depend on the type of operation, e.g., read, write, start, stop, etc.

When analyzing the operation resources required by a task, the system may further note the type of operation on the operational resource that is needed. For example, a task may rely on a particular database, while the type of operation may be read, write, modify. For example, a task may rely on a particular application, while the type of operation may be to start, stop, interact with the application. This may be relevant since a resource may be available for some types of operations, but not others. For example, a database may be available for reading, but not for writing.

The execution of a task may involve communication with a range of systems, each of which relies on a stack of infrastructure to process data, write results back to a database, and make outputs available for consumption by other services. Some of these operations may be time-critical.

A failure of a task execution, e.g., caused by a failure of a subtask, may trigger a recovery process. For instance, if a flow is interrupted at a late stage due to an issue in a specific area, it may require re-executing earlier steps or restarting the entire flow, leading to additional overhead. By analyzing operational resources and identifying the type of operation required, a better estimate of future success can be made, e.g., a failure likelihood.

At some point, at least for a subset of the designated tasks a set of operational resources is determined. Shown in figure 2 is a set 231 of operational resources for task 211. Set 231 comprises identified operational resources 231.1 and 231.2. Also shown is a set 232 for task 212, comprising identified operational resources 232.1 and 232.2, and a set 233 for task 213, comprising identified operational resources 233.1 and 233.2. Often there will be more than two identified operational resources, though a set could comprise only one identified operational resource.

Preferably, for each identified operational resource at least one operational readiness data is collected, though there may be more operational readiness data for one operational resource. In figure 2, one operational readiness data is collected for each operational resource, so that, e.g., operational readiness data 241.1 corresponds to operational resource 231.1 and operational readiness data 241.2 corresponds to operational resource 231.2. This approach of first identifying subtasks, then determining for each subtask the operational resources it requires works well, especially for flows, but as noted it is not necessary, and one could go directly from a designated task, e.g., task 211, to a set of operational resources, e.g., set 231.

### Future Success Metric

Task execution system 200 is configured to estimate a future success metric for the task based on the operational readiness of the required operational resources. For example, system 200 may comprise a future success metric estimator 250 configured thereto. Figure 2 shows multiple future success metrics 259. In particular, a future success metric 251 is estimated for task 211, based on the available operations readiness data, e.g., operations readiness data 241.1 and 241.2. In particular, a future success metric 252 is estimated for task 212, and a future success metric 253 is estimated for task 213.

For example, the future success metric may be a likelihood, e.g., a probability, log probability, etc., that the task will be successfully executed if it is passed to the hyperscaler scheduler now. For example, the future success metric may be a failure rate, e.g., the proportion of times the task failed to execute in the past, possibly limited to past executions under similar circumstances.

A future success metric could be implemented as a number indicating a future failure likelihood. Technically, this is the same. For example, assuming probabilities, one notation could be converted to the other by replacing x by 1 - x; More generally, a future failure metric could be expressed as a future success metric by replacing x, by -x, or *C* - x, where C is a suitably large number, e.g., 100. Thresholds used for comparison with a future success metric could be implemented in the same way for future failure metric.

The future success metric, e.g., the likelihood of successful task execution, may take the availability setup into account. In some cases, a single available resource within an availability zone may be sufficient to provide a response. However, if the task requires a lower response time or higher reliability, multiple resources across different availability zones may need to be available simultaneously. The system can factor in these requirements when estimating the future success metric.

In an embodiment, a user of the system is notified of some or all future success metrics. In particular, a user of the system may be notified of future success metrics that are below a threshold, in particular below the threshold for execution.

### Machine Learning-Based Future Success Metric Estimation

In an embodiment, the future success metric, e.g., the likelihood of successful completion, is determined using a machine learning model trained on historical execution data.

A machine learning model for estimating the future success metric may be implemented using various techniques, including neural networks and probabilistic models such as decision trees or gradient-boosted trees. A neural network-based approach may comprise a feedforward network or a recurrent neural network (RNN), depending on whether temporal dependencies in operational data are considered. The model's inputs may include one or more of: real-time operational readiness data for required resources, historical success and failure rates under similar conditions, task-specific attributes (e.g., resource demands, execution history), and environmental factors such as system load or network latency. The output of the neural network would be a probability score representing the estimated likelihood of successful task execution if scheduled immediately. Alternatively, tree-based models such as gradient-boosted decision trees (e.g., XGBoost or LightGBM) could be used to model the relationship between operational readiness data and task execution success.

Training the model may comprise collecting historical execution data, including task attempts, their associated operational readiness data at execution time, and whether the task succeeded or failed. Labeled training examples may be constructed where the input features represent the state of operational resources and optionally other influencing factors, and the labels indicate task success or failure. The model is trained using supervised learning, optimizing a loss function such as binary cross-entropy for probability estimation or mean squared error if predicting a continuous success score. The dataset may be augmented with engineered features, such as rolling averages of failure rates for specific tasks or contextual factors like time of day, system load, or resource contention levels. Once trained, the model may be used to estimate future success metrics, allowing the system to prioritize tasks with a higher likelihood of successful execution while deferring those with a higher probability of failure until conditions improve.

An embodiment of the machine learning model for estimating the future success metric can be implemented using a transformer-based architecture, such as a large language model (LLM). A transformer model is well-suited for this task because it allows for variable-length input sequences, enabling the system to use a diverse set of operational readiness signals. Operational readiness signals and other relevant information about the task can be provided as input to the model, the so-called prompt. The system can be used efficiently if a smaller set of operational readiness signals is available, but if more information is available, it can be efficiently included, by extending the prompt given to the model.

These prompts may include structured data, such as system monitoring metrics and task metadata, as well as unstructured data, such as excerpts from log files that may contain error messages, warnings, or resource utilization trends.

In an embodiment, the transformer model may receive as input a sequence of operational readiness indicators, which may include log file excerpts, e.g., relevant to system stability, prior errors, and recent task execution patterns, monitoring data capturing CPU and memory utilization, network latency, and database availability, task metadata such as task type, priority, and dependencies on other processes, task input data characteristics including file sizes, data processing requirements, or API response times, temporal information such as the time of day, workload patterns, and past system performance trends, and historical execution outcomes, including past success rates for similar tasks under comparable conditions. The transformer model processes this variable-length input through its attention mechanism, which allows it to assign different weights to different pieces of information, dynamically determining which factors are most relevant for predicting task success. The model outputs a future success metric, such as a probability score indicating the likelihood that the task will execute successfully if scheduled immediately.

The transformer model can be leveraged in two ways. In one approach, a multi-shot learning technique is used, where the model is prompted with a structured input describing the current operational readiness conditions, along with at least one, but preferably multiple, past examples of tasks, operational readiness conditions, and their execution outcomes. The model then generates a probability estimate for success, using its pretrained knowledge and in-context learning capabilities.

In another approach, the model is fine-tuned on historical execution data, where a dataset containing historical task execution attempts, operational conditions at execution time, and success or failure labels is used to train the model to recognize domain-specific patterns and improve predictive accuracy. Hybrids between the two approaches are also possible.

These embodiments provide several advantages. The transformer's ability to handle both structured and unstructured data enables the use of more signals indicative of operational readiness. The model can identify correlations between system states and task execution outcomes, improving prediction quality. The use of multi-shot learning and/or fine-tuning allows the system to adapt over time without requiring extensive retraining from scratch.

### Queueing or scheduling

Task execution system 200 is configured to compare the estimated future success metric to a minimum acceptable success threshold and in response to determining that the likelihood of successful completion is below the minimum acceptable success threshold, queue the task for deferred execution, and otherwise passing the task to a scheduling mechanism of the hyperscaler for execution. For example, system 200 may comprise a task selector 260. In an embodiment, queuing the task and/or passing the task to a scheduling mechanism is performed automatically, e.g., without user intervention. In an embodiment, a user may override queuing the task and/or passing the task, e.g., by removing the task from the queue and causing it to schedule, e.g., to execute.

This could be done as a single future success metric has been estimated for a single task. This could also be done when multiple future success metrics have been estimated for multiple tasks.

In an embodiment, a user of the system is notified if a task is queued for deferred execution. In an embodiment, a user of the system is notified if a task is queued for deferred execution, but not if the task is passed to scheduling.

Figure 2 shows task selector 260 selecting task 212 for immediate scheduling based on future success metric 252, e.g., in hyperscaler scheduling mechanism 262 based on future success metric 251 and 253 respectively, while tasks 211 and 213 are placed on deferred execution queue 261. For example, tasks 211 and 213 may both rely on a database that is currently offline, so their success metrics are very low, possibly zero, while task 212 might not rely on that database and has a normal high success metric.

Minimum acceptable success threshold There are various ways to obtain the minimum acceptable success threshold. A straightforward implementation involves setting the threshold to a fixed value obtained through system tuning during deployment. This allows for practical optimization based on empirical observations of task execution patterns and failure rates, ensuring that the system functions efficiently without requiring complex real-time calculations.

The minimum acceptable success threshold for a task may be determined based on a combination of factors, including task failure costs and/or priority levels.

For example, the minimum acceptable likelihood may be reduced for a task that has a task failure costs below a threshold. For example, the system may be configured to retrieve task failure costs associated with the task failing, and use it to set the minimum acceptable likelihood.

Execution of tasks designated for execution in a hyperscaler may result in task failure, which will have an associated task failure cost, e.g., a computational cost. Task failure costs may include one or more of the computational resources expended during the failed execution attempt as well as additional resources required for recovery actions necessary to revert the system to a correct operational state, e.g., before retrying the task. Specifically, when a task execution fails, not only is the computational effort expended up to the failure point lost, but supplementary resources must also be allocated to undo partial work performed prior to failure. Consequently, a failed execution followed by a successful retry inevitably consumes more resources compared to an immediately successful execution.

The task failure cost represents the incremental resource expenditure incurred due to the failure and subsequent recovery actions. Task failure costs may be quantified using various metrics, including CPU cycles, wall clock time, memory consumption, network bandwidth usage, or combinations thereof.

Task failure costs may not be constant, as failure can occur at different stages of execution, each stage potentially having distinct associated costs. To address this a historic average of past failure costs may be used. The Task failure cost may be predicted, e.g., using a machine learning model taking as input, e.g., the operational readiness data for the required resources.

An advantageous practical approach involves using recovery costs as a proxy for task failure cost. Recovery costs, which represent only the resources required to revert the system to a correct state following a failure, are typically easier to measure and can serve as an approximation of the overall task failure costs.

In an embodiment, the minimum acceptable success threshold may be computed based on a function of the task failure cost associated with the task. Since tasks with higher task failure costs are more expensive to retry or recover from, the function defining the threshold is non-decreasing with respect to task failure cost. That means, as task failure cost increases the success metric needs to be higher before a task is scheduled. Or put yet another way, a task with high task failure costs needs to have a good future success metric before it is scheduled.

For example, in an embodiment, the threshold is defined as the minimum of one and the product of a scaling factor and the task failure cost, e.g., *Min* (1, *αR*), with *α* a scaling factor and *R* the task failure cost. This assumes that the success metric is expressed on a scale of 0 to 1; Embodiments can adjust if needed, e.g., the minimum of the maximum future success metric and the product of a scaling factor and the task failure cost.

Alternatively, the threshold may be computed using a fraction in which the task failure cost is scaled relative to an adjustable parameter that influences how quickly the required threshold increases with higher task failure costs. For example, the formula for the threshold may be: *R*/(*A* + *R*), with *A* a scaling factor.

These formulations share that tasks with high task failure costs are executed only when the likelihood of success is sufficiently high, while tasks with low task failure costs are still attempted even if their success metric is lower.

The scaling factor used in these computations provides a mechanism to adjust the system's sensitivity to task failure costs. By tuning the scaling factor, the system can dynamically raise or lower the required minimum acceptable success threshold, making it more or less conservative in deciding whether to execute a task. This adjustment can be useful for system deployment and tuning, allowing operators to configure execution policies based on the specific requirements of the environment in which the system is installed.

In addition to task failure costs, or instead of, the minimum acceptable success threshold may incorporate a priority factor, where higher-priority tasks are more likely to be executed even under uncertain conditions. In such cases, the threshold may be computed as a function that is non-decreasing with respect to task failure cost and non-increasing with respect to priority. This ensures that critical tasks are not delayed due to strict success criteria, while lower-priority tasks are deferred, especially when their failure could lead to high task failure costs, e.g., high recovery efforts.

In an embodiment, as the priority factor increases the success metric may be lower while the task is still scheduled. Or put yet another way, a task with high priority task failure costs may have lower future success metric and still be scheduled.

Another approach to incorporating task failure costs into task execution decisions is to modify the success metric itself rather than adjusting the threshold. In one embodiment, the success metric is multiplied by a task failure cost factor, where the factor is higher for low-cost task failure and lower for high-cost task failure. For instance, if a task has a high estimated failure rate but incurs minimal task failure costs, the failure rate may be reduced by a predetermined factor, increasing the likelihood of execution.

For example, in an embodiment, the task failure cost factor may be set to a value higher than 1, e.g., to a value of 2 in case of low or no task failure costs, but is set to a value of 1, in case of medium or high task failure costs.

For example, suppose a task has an estimated failure rate of 80% , but also has low task failure costs. That is, it might be very easy to retry this task, as no complex recovery is needed. In this case, the failure rate may be decreased to 40% thus increasing the likelihood of execution drastically. Note, in this case the success metric is implemented as a failure rate, so that multiplying by 2 of the success metric is implemented as dividing by 2.

### After queueing

The system is configured to dynamically update the future success metric after a task has been placed in the queue, as new information becomes available. As operational conditions change, in particular operational readiness as indicated by operational readiness data, the future success metric may be recalculated to reflect the latest state of the environment.

In an embodiment, the system redetermines the future success metric and optionally the minimum acceptable success threshold at regular intervals or in response to specific system events. When the updated future success metric for a queued task rises above the corresponding minimum acceptable success threshold, the task may be passed to the scheduling mechanism of the hyperscaler for execution. This allows tasks to be deferred until conditions improve while ensuring that they are executed as soon as their likelihood of success reaches an acceptable level. The redetermination process may consider various factors, including improvements in resource availability, the resolution of transient system issues, or optimizations performed by the hyperscaler's infrastructure.

In an embodiment, such redetermination is however note done. In such a case it would be up to a system personal to move a task out of the queue and either pass it to regular scheduling, e.g., to execution, or to redetermine if it should continue to defer execution.

Below, several further optional refinements, details, and embodiments are illustrated.

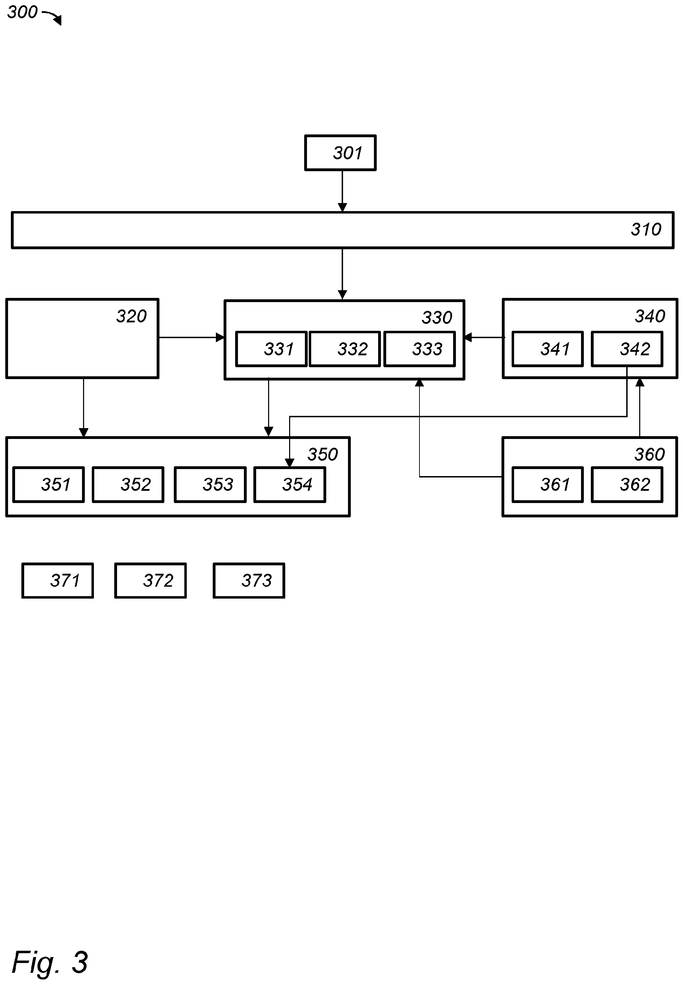

**Figure 3** schematically shows an example of an embodiment of a task execution system 300. System 300 provides access to one or more hyperscalers to run a number of Enterprise Application Systems. Shown are Enterprise Application Systems 371-373, but there may be more than three such systems. For example, system 300 provides one or more of: Hyperscaler APIs 351, Landscape Management 352, Logs 353, and Landscape Automation 354.

Task execution system 300 is configured for identification of infrastructure resource dependencies. System 300 may comprise thereto a Dependency Analyzer 320, which identifies all infrastructure resource dependencies pertinent to a specific operation, e.g., tasks designated for execution. To accomplish this, Dependency Analyzer 320 uses indicators such as utilized API endpoints, network segments and environments, and availability zones associated with these resources. It also classifies the types of operations (e.g., start, stop, read, write) being executed on these resources.

Task execution system 300 is configured for calculation of execution probability. System 300 comprises an Execution Probability Calculator 330 thereto, which assesses the likelihood of a successful operation execution. Execution Probability Calculator 330 may comprise a Status Retrieval Submodule 331. Status Retrieval Submodule 331 is configured to accesses and aggregate resource availability, status, logging data, associated service tickets, and monitoring information from hyperscaler APIs related to the identified resource dependencies. Execution Probability Calculator 330 may comprise a Probability Calculation Algorithm 332. Probability Calculation Algorithm 332 uses the information obtained by Status Retrieval Submodule 331 to compute the success probability of each operation. Execution Probability Calculator 330 may comprise a Notification System 333. Notification System 333 is configured to notify users of the system, e.g., administrators, about the calculated success probability of each operation. It also enforces a policy to prevent operations with a low probability of success from being executed, whether they are manual or scheduled.

Task execution system 300 comprises an Operation Management and Recommendation System 340. Based on the calculated probability of successful execution, Operation Management and Recommendation System 340 recommends whether operations (ad hoc or scheduled) should be immediately executed or if they should be queued. It dynamically manages the execution of pending operations, ensuring they are carried out only when the probability of success is sufficiently high. System 340 comprises a Recommendation Engine 341. Recommendation Engine 341 suggests whether to proceed with executing operations immediately (ad hoc) or as scheduled. Alternatively, it advises queueing pending operations until the probability of successful execution increases to an acceptable level. System 340 comprises a Queue Manager 342. Queue Manager 342 organizes and prioritizes operations to be executed once the probability increases to acceptable levels.

Task execution system 300 is configured for regular reevaluation of execution probability. System 300 comprises a Continuous Evaluation and Adjustment Module 360, which continuously reevaluates the execution probabilities using the method described above. It ensures that queued operations are considered for execution when conditions improve.

Continuous Evaluation and Adjustment Module 360 comprises a Periodic Reevaluation Scheduler 361, which is configured to trigger regular reassessment of execution probabilities, and a Dynamic Adjustment Processor 362, which adjusts the operation queue and execution plans based on up-to-date probability calculations.

A user 301 may operate the system through an administration and/or operation console 310.

An embodiment provides continuous probability evaluation and dynamic queuing of operations, with an integrated recommendation system. Embodiments provide several significant benefits.

For example, downtime is reduced by proactively identifying and handling potential infrastructure issues. As a result, the likelihood of unexpected downtimes that disrupt business processes is reduced. The system thus obtains higher availability and continuity of operations.

For example, reliability is enhanced. The continuous monitoring and recalculations of execution probabilities result in improved reliability of system operations. Administrators can rely on a more stable and predictable environment, reducing uncertainties.

For example, resource utilization is improved. By dynamically managing the execution queue and prioritizing operations based on real-time conditions, the system ensures efficient use of hyperscaler resources. This leads to better performance and cost savings by avoiding resource waste on unsuccessful operations.

For example, operational efficiency is improved. Administrators benefit from actionable insights and recommendations, allowing them to make informed decisions about the timing and prioritization of tasks. This leads to streamlined operations and a more responsive management approach.

For example, cascading failures are mitigated. The intelligent identification and management system prevents operations from exacerbating issues in an already failing environment, thereby avoiding a domino effect where multiple operations are impacted by a single resource failure.

With its continuous evaluation and adjustment mechanism, the system adapts to changing conditions and improves over time, ensuring that queued tasks are actioned when they have the highest probability of success. This leads to a robust and evolving operational framework that keeps pace with the dynamic nature of cloud environments.

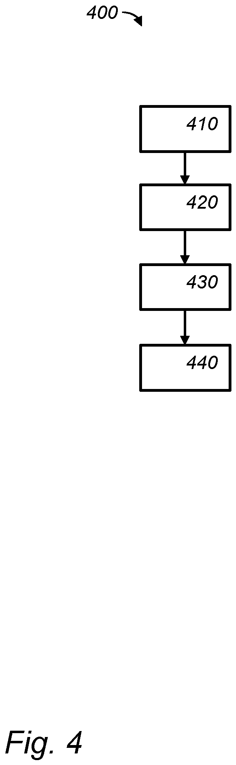

**Figure 4** schematically shows an example of an embodiment of a method 400 for proactive control of task execution in a hyperscaler. Method 400 may be computer implemented and comprises
- obtaining (410) a set of tasks designated for execution within the hyperscaler,
- collecting (420) data on an operational readiness of operational resources required by the designated tasks,
- estimating (430) a future success metric for the task based on the operational readiness of the required operational resources,
- comparing (440) the estimated future success metric to a minimum acceptable success threshold and in response to determining that the likelihood of successful completion is below the minimum acceptable success threshold, queuing the task for deferred execution, and otherwise passing the task to a scheduling mechanism of the hyperscaler for execution.

Many different ways of executing the method are possible, as will be apparent to a person skilled in the art. For example, the steps can be performed in the shown order, but the order of the steps can be varied, or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing one or more computers, e.g., a processor system, to perform an embodiment of method 400. The software may include only those steps taken by a particular sub-entity of the system. The software and/or other data according to an embodiment may be stored in a non-transitory storage medium, such as a hard disk, a floppy disk, a memory, an optical disc, read-only memory, random access memory, CD-ROMs, magnetic tape, optical data storage devices, etc. Transitory signals and carrier waves are excluded from non-transitory media.

The software may be sent as a transitory signal along a wire or wirelessly, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, code intermediate between source and object code, such as partially compiled code, or in any other form suitable for use in the implementation of an embodiment of the method. An embodiment relating to a computer program product comprises computer-executable instructions corresponding to each of the processing steps of at least one of the methods set forth. These instructions may be subdivided into subroutines and/or be stored in one or more files that may be linked statically or dynamically. Another embodiment relating to a computer program product comprises computer-executable instructions corresponding to each of the devices, units, and/or parts of at least one of the systems and/or products set forth.

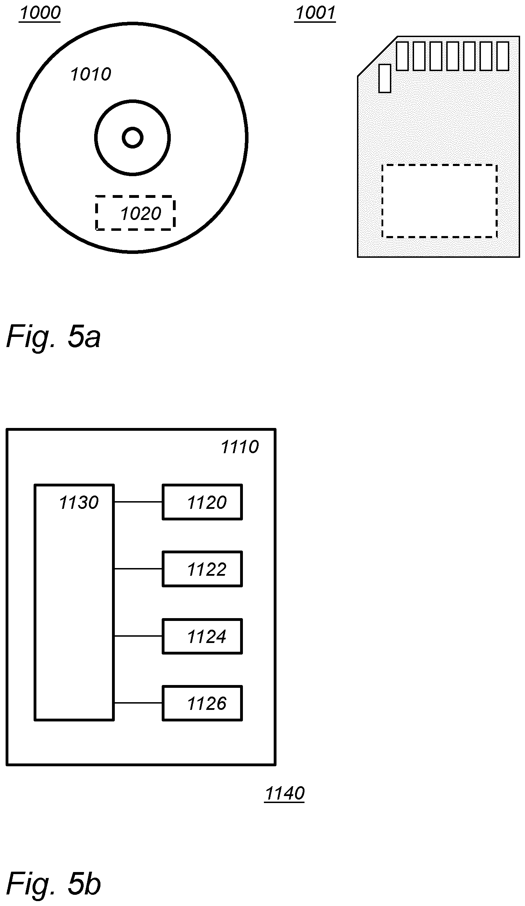

**Figure 5a** shows a computer-readable medium 1000 having a writable part 1010, and a computer-readable medium 1001 also having a writable part. Computer-readable medium 1000 is shown in the form of an optically readable medium. Computer-readable medium 1001 is shown in the form of an electronic memory, in this case a memory card. Computer-readable mediums 1000 and 1001 may store data 1020 wherein the data may indicate instructions which, when executed by a processor system, cause a processor system to perform an embodiment of a method for proactive control of task execution in a hyperscaler, according to an embodiment. The computer program 1020 may be embodied on the computer-readable medium 1000 as physical marks or by magnetization of the computer-readable medium 1000. However, any other suitable embodiment is conceivable as well. Furthermore, it will be appreciated that, although the computer-readable medium 1000 is shown here as an optical disc, the computer-readable medium 1000 may be any suitable computer-readable medium, such as a hard disk, solid-state memory, flash memory, etc., and may be non-recordable or recordable. The computer program 1020 comprises instructions for causing a processor system to perform an embodiment of said method for proactive control of task execution in a hyperscaler.

**Figure 5b** shows a schematic representation of a processor system 1140 according to an embodiment. The processor system comprises one or more integrated circuits 1110. The architecture of the one or more integrated circuits 1110 is schematically shown in Figure 5b. Integrated circuits 1110 comprises a processing unit 1120, e.g., a processor, a CPU, for running computer program components to execute a method according to an embodiment and/or implement its modules or units. Integrated circuits 1110 comprises a memory 1122 for storing programming code, data, etc. Part of memory 1122 may be read-only. Integrated circuits 1110 may comprise a communication element 1126, e.g., an antenna, connectors, or both, and the like. Integrated circuits 1110 may comprise a dedicated integrated circuit 1124 for performing part or all of the processing defined in the method. Processing unit 1120, memory 1122, dedicated IC 1124 and communication element 1126 may be connected to each other via an interconnect 1130, such as a bus. The processor system 1140 may be arranged for contact and/or contactless communication, using an antenna and/or connectors, respectively.
For example, in an embodiment, processor system 1140, e.g., the controller configured to control task execution in a hyperscaler, may comprise a processor circuit and a memory circuit, the processor being arranged to execute software stored in the memory circuit. The memory circuit may be a ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processing unit 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (400) for proactive control of task execution in a hyperscaler, the method comprising
- obtaining (410) a set of tasks designated for execution within the hyperscaler,
- collecting (420) data on an operational readiness of operational resources required by the designated tasks,
- estimating (430) a future success metric for a task of the designated tasks based on the operational readiness of the required operational resources,
- comparing (440) the estimated future success metric to a minimum acceptable success threshold and in response to determining that the likelihood of successful completion is below the minimum acceptable success threshold, queuing the task for deferred execution, and otherwise passing the task to a scheduling mechanism of the hyperscaler for execution.

2. The method of Claim 1 comprising
- for at least a portion of the set of tasks, analyzing the tasks to identify a set of subtasks on which successful execution of the respective task depends,
- for a given task, determining, for the identified subtasks, a set of operational resources required for execution.

3. The method according to any one of the preceding claims, comprising computing the minimum acceptable success threshold for the task based on a task failure cost associated with the task, wherein the minimum acceptable success threshold is a non-decreasing function of the associated task failure cost, said function not being constant.

4. The method of Claim 3, wherein the function includes a scaling factor, wherein the scaling factor is adjustable thereby raising or lowering the required minimum acceptable success threshold.

5. The method of any one of the preceding claims, wherein the minimum acceptable success threshold is computed from a task failure cost associated with the task and a priority factor associated with the task, wherein the minimum acceptable success threshold is a non-decreasing function of the task failure cost and a non-increasing function of the priority factor, said function not being constant.

6. The method according to any one of the preceding claims, wherein collecting data on operational readiness comprises retrieving real-time status metrics from a monitoring system.

7. The method according to any one of the preceding claims, wherein collecting data on operational readiness comprises accessing one or more of: status data, logging data, associated service tickets, and information from hyperscaler APIs related to the identified resource dependencies.

8. The method according to any one of the preceding claims, wherein operational readiness includes the required operational resource having a sufficiently low response time.

9. The method according to any one of the preceding claims, wherein collecting data on an operational readiness of the required operational resources, comprises obtaining distribution data on response times of the required operational resources, and determining the future success metric comprises determining a likelihood that the task is completed in a sufficiently low response time, using the distribution data.

10. The method according to any one of the preceding claims, wherein the future success metric is determined using a machine learning model trained on historical execution data.

11. The method according to any one of the preceding claims, wherein the operational resources comprise at least one of: a network resource, a storage resource, an API endpoint, a network segment, an environment, an availability zone, a database, a virtual machine, a memory, a CPU, an authentication service, an integrated business process, a CRM, an ERP, an application-level dependency.

12. The method according to any one of the preceding claims, further comprising dynamically updating the future success metric based on changes in the operational readiness of the required operational resources.

13. The method of any one of the preceding claims, comprising redetermining the future success metric and/or redetermining the minimum acceptable success threshold, and in response to the redetermining, determining for a task on the queue that, the future success metric is now above the minimum acceptable success threshold, then passing the task to a scheduling mechanism of the hyperscaler for execution.

14. A system comprising: one or more processors; and one or more storage devices storing instructions that, when executed by the one or more processors, cause the one or more processors to perform operations for any one of the preceding claims.

15. One or more non-transitory computer-readable media storing computer-executable instructions that, when executed by a computing system, cause the computing system to perform operations according to any one of Claims 1-13.
